# FASCICULE DE BREVET EUROPEEN

(11) **EP 1 807 290 B1**
(45) Date de publication et mention de la délivrance du brevet: **01.10.2008**
(21) Numéro de dépôt: 05807379.2
(22) Date de dépôt: 03.11.2005
(51) Int. Cl.: B60S 1/34

(54) **ESSUIE-GLACE A PANTOGRAPHE**
PANTOGRAFSCHEIBENWISCHER
PANTOGRAPH WINDSCREEN WIPER

(30) Priorité: 05.11.2004 FR 0411853
(43) Date de publication de la demande: 18.07.2007
(73) Titulaire: VALEO SYSTEMES D'ESSUYAGE, 78321 La Verrière (FR)
(72) Inventeur: PRINCENT, Joël, F-86100 Châtellerault (FR)
(86) Numéro de dépôt international: PCT/EP2005/011759
(87) Numéro de publication internationale: WO 2006/048281

(56) Documents cités:
- DE-A1- 3 127 018
- US-A- 2 834 038
- US-A- 2 871 501
- US-A- 4 791 696

## Description

La présente invention concerne un essuie-glace à pantographe, notamment pour véhicule automobile comprenant un pare-brise dit « panoramique ».

Un pare-brise est dit panoramique lorsqu'il comprend des portions d'extrémités latérales qui reviennent sur les cotés du véhicule, et présente donc de chaque coté une zone de très forte courbure.

Pour ce type de pare-brise, le problème qui se pose est de pouvoir essuyer efficacement non seulement la face avant du vitrage, généralement à faible courbure, mais aussi ces portions d'extrémités latérales à très forte courbure.

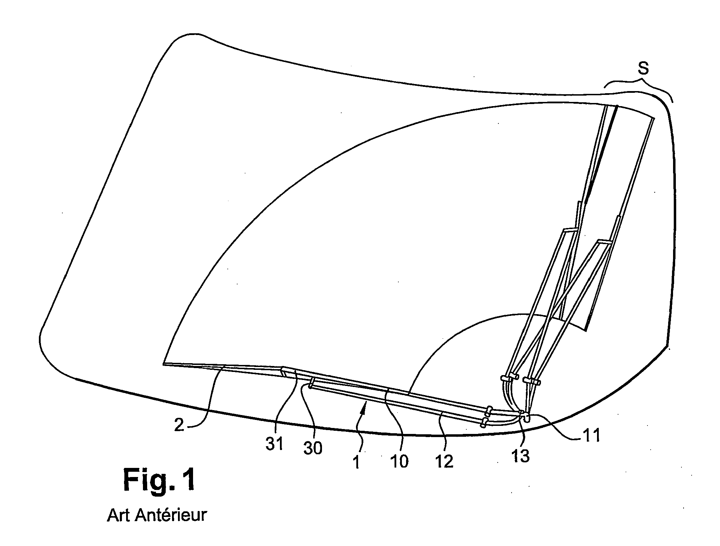

Un essuie-glace de type pantographe permet d'optimiser la trajectoire du balai d'essuie-glace par rapport au pare-brise de manière à ce qu'une plus grande surface du pare-brise soit balayée. Le principe d'un tel essuie-glace de type pantographe consiste à imprimer au balai d'essuie-glace une trajectoire non circulaire sur au moins certaines portions du pare-brise (notamment les portions d'extrémités latérales), contrairement à un essuie-glace classique pour lequel la trajectoire du balai est circulaire sur toute la surface du pare-brise. Pour ce faire, l'essuie-glace de type pantographe comporte, comme représenté schématiquement sur la figure 1, un support 1 portant le balai 2 et formé de deux bras sensiblement parallèles l'un par rapport à l'autre en position de repos, à savoir :
- une bras principal 10,
- un bras secondaire 12.

Le support 1 est susceptible de pivoter sensiblement autour d'un pivot rotatif 11. Le pivot rotatif 11 a un axe longitudinal sensiblement perpendiculaire à un plan grossièrement défini par la surface du pare-brise. Le pivotement est classiquement assuré par un moteur électrique non représenté permettant un mouvement de balayage alterné. Le balai 2 décrit ainsi une trajectoire sur le pare-brise permettant l'essuyage d'une partie du pare-brise.

L'inclinaison du balai 2 relativement au support 1 est déterminée par les positions relatives des deux autres extrémités, dites extrémités savant, du bras principal 10 et du bras secondaire 12.

L'essuie-glace peut à cet effet comprendre une biellette sensiblement en forme de « L ». Un premier côté 30 de la forme de « L » relie les deux extrémités avant du bras principal 10 et du bras secondaire 12. L'autre côté 31 de la forme en « L » porte le balai 2 d'essuie-glace.

Les liaisons entre les extrémités avant respectivement du bras principal 10 et du bras secondaire 12, et le premier coté 30 de la biellette en forme de « L » sont prévues de sorte que le premier côté 30 puisse pivoter dans le plan formé par le bras principal 10 et le bras secondaire 12. Le pivotement peut s'effectuer autour de deux axes de rotation distincts. Lorsque les positions relatives des extrémités avant du bras principal 10 et du bras secondaire 12 varient, la biellette pivote autour de l'un des axes de rotation et l'inclinaison du balai 2 est modifiée.

Cette variation de l'inclinaison du balai est montrée sur la figure 1 pour trois positions distinctes de l'essuie-glace : une première position de repos dans laquelle l'ensemble support/balai est sensiblement aligné avec le bord inférieur du pare-brise, une position intermédiaire, et une position extrême.

En dimensionnant correctement les différents éléments ci-dessus en fonction de la taille et de la forme du pare-brise, on arrive à obtenir, avec un tel essuie-glace de type pantographe, un déplacement linéaire du balai au niveau notamment de la zone d'extrémité latérale S, comme le montrent schématiquement la position intermédiaire et la position extrême de la figure 1, entre lesquelles l'inclinaison du balai 2 va en augmentant.

Le brevet américain 2,834,038 décrit un essuie-glace de type pantographe dans lequel la position du bras secondaire relativement au bras principal est déterminée par une came. La came comprend une rainure destinée à recevoir un suiveur lié au bras secondaire. La rainure a une forme telle que lorsque le support est mis en mouvement, la position du bras secondaire relativement au bras principal varie lorsque le balai arrive dans une zone d'extrémité latérale.

Néanmoins un tel essuie-glace de type pantographe n'est pas toujours adapté pour obtenir une bonne qualité d'essuyage. En effet, un autre critère permettant d'obtenir un essuyage de qualité réside dans l'angle d'attaque du balai, à savoir l'orientation du balai au niveau de son point de liaison avec le bras principal par rapport à la normale à la surface du pare-brise. Lors d'un balayage complet dans un sens allant de la position de repos de l'essuie-glace à la position extrême, une amélioration de la qualité d'essuyage est obtenue s'il est possible de faire varier cet angle d'attaque du balai en fonction de la zone de pare-brise dans laquelle on se trouve.

L'essuie-glace à pantographe décrit précédemment ne permet pas de faire varier l'angle d'attaque comme spécifié ci-dessus, et, dans le cas d'un pare-brise panoramique, on peut se retrouver, avec un balai formant, au niveau de la zone latérale, un angle d'attaque avec la normale au pare-brise beaucoup trop important. Il en résulte notamment que le balai ne sera pas positionné correctement en terme d'angle d'attaque lorsqu'il entamera son balayage retour vers la position de repos. Le document DE 3 127 018 A1 décrit un essuie-glace à pantographe selon le préambule de la revendication 1.

La présente invention a pour but d'améliorer l'essuie-glace de type pantographe décrit précédemment pour accroître l'efficacité de l'essuyage, et ce, même dans les portions d'extrémités latérales du pare-brise.

La présente invention a pour objet un essuie-glace de type pantographe comprenant un support portant un balai, le support étant entraînable en pivotement d'essuyage autour d'un pivot rotatif. Le support comprend un bras principal et un bras secondaire. L'inclinaison du balai relativement au support est déterminée par les positions relatives des extrémités avant du bras principal et du bras secondaire. L'essuie-glace comprend une première came comprenant une première trajectoire de guidage destinée à recevoir une première pièce de transmission, une première pièce choisie parmi la première came et la première pièce de transmission étant liée au bras secondaire. L'essuie-glace selon l'invention comprend par ailleurs une seconde came comprenant une seconde trajectoire de guidage destinée à recevoir une deuxième pièce de transmission. Des moyens de conversion comprenant une seconde pièce choisie parmi la seconde came et la deuxième pièce de transmission agissent sur le bras principal. Les moyens de conversion permettent de transformer un mouvement de translation le long d'un axe longitudinal du bras principal, le mouvement de translation étant engendré par la seconde trajectoire de guidage, en un mouvement de rotation du bras principal autour de cet axe longitudinal.

L'essuie-glace selon la présente invention permet de jouer à la fois, et de façon indépendante, sur l'inclinaison du balai relativement au support via un mouvement de translation du bras secondaire, et sur l'angle d'attaque via le mouvement de rotation du bras principal. Le mouvement de translation du bras secondaire et le mouvement de rotation du bras principal sont eux-mêmes générés respectivement par la première trajectoire de guidage et la seconde trajectoire de guidage. Lorsque la surface à essuyer présente des zones courbes, comme par exemple les pare-brise panoramiques, les formes des trajectoires de guidage peuvent être choisies judicieusement de façon à assurer un essuyage correct, même dans les zones courbes.

L'essuie-glace selon la présente invention comprend un nombre relativement réduit de pièces. L'essuie-glace est donc relativement simple à fabriquer et son volume relativement faible.

De plus, la position du bras secondaire relativement au support, ainsi que l'orientation du balai sont déterminées par les formes des trajectoires de guidage des cames. Les formes des cames sont donc choisies en fonction de la surface à essuyer. L'adaptation de l'essuie-glace selon la présente invention à différents véhicules est par conséquent relativement aisée : pour des pièces de l'essuie-glace de même dimensions, il suffit de remplacer les cames.

La première pièce comprend avantageusement la première pièce de transmission et la seconde pièce comprend avantageusement la deuxième pièce de transmission. La première came et la seconde came sont alors fixes relativement au pivot rotatif, alors que la première pièce de transmission et la deuxième pièce de transmission sont entraînés en pivotement d'essuyage.

Alternativement, la première pièce peut comprendre la première came, c'est à dire que la première came est liée au bras secondaire, tandis que la première pièce de transmission est fixe relativement au pivot rotatif. De même, la seconde pièce peut comprendre la seconde came, c'est à dire que la seconde came est liée au bras principal tandis que la deuxième pièce de transmission est fixe relativement au pivot rotatif.

La première came et la seconde came sont avantageusement d'une seule pièce.

Alternativement, la première came et la seconde came sont deux pièces distinctes l'une de l'autre.

La première trajectoire de guidage comprend avantageusement une première rainure et la seconde trajectoire de guidage comprend avantageusement une seconde rainure. Les rainures des cames permettent de maintenir les suiveurs associés à l'intérieur des rainures.

Toutefois, la première trajectoire de guidage et/ou la seconde trajectoire de guidage peuvent être constituées par la forme extérieure respectivement de la première came et de la seconde came. De manière générale, la présente invention n'est pas limitée par la nature des trajectoires de guidage.

L'essuie-glace selon la présente invention comprend avantageusement des moyens de transmission permettant de translater le bras secondaire sensiblement dans la direction de l'axe longitudinal. Les moyens de transmission comprennent avantageusement la première pièce de transmission et une rotule, dite de translation, solidaire de la première pièce de transmission. La rotule de translation permet de transmettre au bras secondaire les mouvements de translation. En revanche, la rotule de translation laisse au bras secondaire la liberté de tourner sensiblement sur lui-même ou bien autour de l'axe longitudinal du bras principal. La rotule de translation permet d'absorber les mouvements de rotation du bras secondaire engendrés par la rotation du bras principal autour de l'axe longitudinal.

La rotule de translation et la première pièce de transmission peuvent être d'une seule pièce, ou pas.

La présente invention n'est cependant pas limitée par la nature des moyens de transmission.

Les moyens de conversion comprennent avantageusement une rainure oblique par rapport à l'axe longitudinal, et liée à la deuxième pièce de transmission. La rainure oblique est destinée à recevoir un tenon lié au bras principal.

Lorsque la rainure oblique est translatée, sensiblement dans la direction de l'axe longitudinal, du fait du déplacement de la deuxième pièce de transmission dans la seconde rainure, le tenon a un déplacement de rotation, sensiblement autour de l'axe longitudinal. Le tenon peut par exemple être solidaire du bras principal, ou bien être lié au bras principal de n'importe quelle autre manière pourvu que la rotation du tenon entraîne la rotation du bras principal.

Alternativement, les moyens de conversion peuvent comprendre une douille à bille liée à la deuxième pièce de transmission et un arbre coopérant avec la douille à bille. L'arbre comprend une rainure hélicoïdale et est lié au bras principal.

La douille à bille peut être solidaire de la deuxième pièce de transmission, ou bien liée à la deuxième pièce de transmission de tout autre manière pourvu qu'un mouvement de translation de la deuxième pièce de transmission entraîne un mouvement de translation de la douille à billes.

Une ou des billes sont fixées sur la paroi interne de la douille à billes, la fixation étant telle que la ou les billes peuvent rouler sur elles-mêmes en gardant une position fixe relativement à la paroi interne. L'arbre comprend une ou des rainures hélicoïdales. La ou les rainures hélicoïdales ont des dimensions autorisant un déplacement relatif de la ou les billes à l'intérieur de la ou des rainures hélicoïdales, mais obligeant la ou les billes situées à l'intérieur d'une rainure hélicoïdale à rester à l'intérieur de la rainure hélicoïdale. Lorsque la partie de l'arbre comprenant la ou les rainures hélicoïdales est placée à l'intérieur de la douille à bille, de telle sorte que la ou les billes sont situées à l'intérieur de la ou des rainures hélicoïdales, un mouvement de translation de la douille à bille entraîne, du fait du glissement de la ou les billes à l'intérieur de la ou des rainures hélicoïdales, un mouvement de rotation de l'arbre sur lui-même.

L'arbre peut être solidaire du bras principal, ou bien être lié au bras principal de n'importe quelle autre manière pourvu que la rotation de l'arbre entraîne la rotation du bras principal sensiblement autour de l'axe longitudinal.

La présente invention n'est pas limitée par la nature des moyens de conversion.

L'essuie-glace selon la présente invention comprend de préférence un moyen élastique de rappel entre le pivot rotatif et le bras principal, de façon à corriger des jeux éventuels. Le moyen élastique de rappel peut par exemple comprendre un ressort.

La présente invention n'est limitée ni par la nature du moyen élastique de rappel, ni par la présence de ce moyen élastique de rappel.

L'invention est décrite ci-après plus en détail à l'aide de figures ne représentant qu'un mode de réalisation préféré de l'invention.

La figure 1, déjà commentée, illustre schématiquement les positions respectivement de repos, intermédiaire et extrême d'un essuie-glace de type pantographe de l'art antérieur.

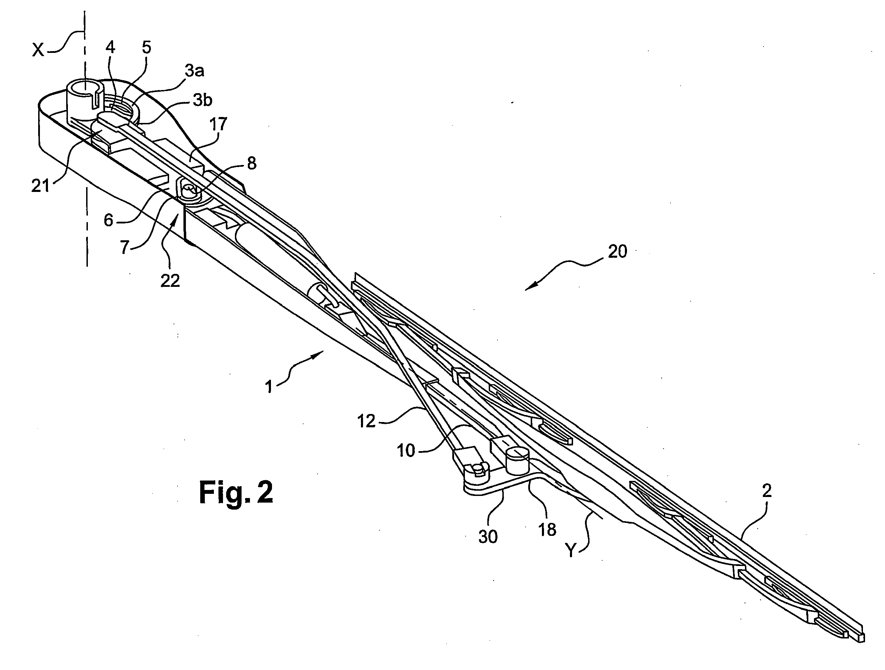

La figure 2 est une vue schématique d'un exemple d'essuie-glace selon un premier mode de réalisation de la présente invention.

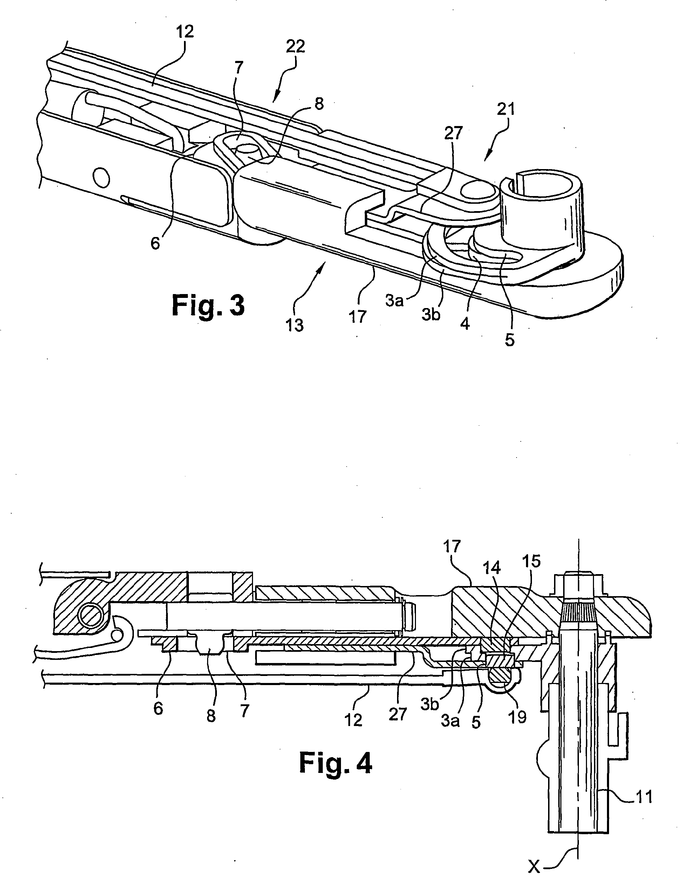

La figure 3 est une vue en détail d'une partie de l'exemple d'essuie-glace selon le premier mode de réalisation de la présente invention.

La figure 4 est une vue en coupe et en détail d'une partie d'un exemple d'essuie-glace selon le premier mode de réalisation de la présente invention.

La figure 5 est une vue d'un exemple de came pour un essuie-glace selon la présente invention.

La figure 6 est une vue d'une partie d'un exemple essuie-glace selon le premier mode de réalisation de la présente invention.

La figure 7 est une vue en coupe d'une partie d'un exemple d'essuie-glace selon un second mode de réalisation de la présente invention.

La figure 8 est une vue en perspective d'un exemple d'arbre et de billes pour un exemple d'essuie-glace selon le second mode de réalisation de la présente invention.

On notera que des éléments ou parties identiques ou similaires ont été désignés par les mêmes signes de référence sur les différentes figures.

Un essuie-glace selon un premier mode de réalisation de la présente invention comprend un support 1 portant un balai 2. Le support est entraînable en pivotement d'essuyage, sensiblement autour d'un pivot rotatif 11. Le pivot rotatif 11 est, dans sa direction longitudinale, sensiblement parallèle à un axe de pivotement X sensiblement perpendiculaire à un plan grossièrement formé par la surface d'un pare-brise ou de toute autre surface. Le pivotement peut être généré par un moteur non représenté. Une glissière 17 permet de transmettre le mouvement de pivotement au reste du support 1.

L'inclinaison du balai 2 relativement au support 1 peut être réglée via les positions relatives des extrémités avant d'un bras principal 10 et d'un bras secondaire 12 du support 1.

Une première came 3a et une seconde came 3b sont fixes relativement au pivot rotatif 11. Les cames 3a, 3b sont ici d'une seule pièce. La première came 3a et la seconde came 3b comprennent respectivement une première rainure 5 et une seconde rainure 4.

La première rainure 5 est destinée à recevoir une première pièce de transmission 15. La première pièce de transmission 15 est entraîné à l'intérieur de la première rainure 5 par une pièce de transmission 27, elle-même entraînée par la glissière 17.

Des moyens de transmission 21 comprenant cette première pièce de transmission 15 permettent de translater le bras secondaire 12 sensiblement dans la direction d'un axe longitudinal Y du bras principal 10. La forme de la première rainure 5 détermine donc les variations de la position de l'extrémité avant du bras secondaire 12, et donc indirectement l'inclinaison du balai 2 relativement au support 1, lorsque le support 1 est entraîné en pivotement d'essuyage.

La seconde rainure 4 est destinée à recevoir une deuxième pièce de transmission 14 de moyens de conversion 22 permettant de transformer un mouvement de translation le long de l'axe longitudinal Y du bras principal 10 en un mouvement de rotation du bras principal 10 autour de cet axe longitudinal Y.

Dans le premier mode de réalisation de la présente invention, les moyens de conversion 22 comprennent, outre la deuxième pièce de transmission 14, une pièce de conversion 6. La pièce de conversion est liée à la deuxième pièce de transmission 14, de telle sorte que la pièce de conversion a un mouvement de translation généré par la forme de la seconde rainure 4.

La pièce de conversion 6 comprend une rainure oblique 7 par rapport à l'axe longitudinal Y. La rainure oblique est destinée à recevoir un tenon 8 lié au bras principal 10. Lorsque la pièce de conversion 6 est translatée, sensiblement dans la direction de l'axe longitudinal Y, du fait du déplacement de la deuxième pièce de transmission 14 dans la seconde rainure 4, le tenon 8 a un déplacement de rotation, sensiblement autour de l'axe longitudinal Y. Le tenon 8 est lié au bras principal 10, de sorte que le bras principal 10 est alors entraîné dans un mouvement de rotation autour de son axe longitudinal Y, permettant par-là de modifier l'angle d'attaque du balai 2.

Le bras principal 10 et le bras secondaire 12 ont leurs extrémités avant fixées sur un premier coté 30 d'une biellette 18. Les liaisons entre les extrémités avant respectivement du bras principal 10 et du bras secondaire 12, et le premier coté 30 de la biellette 18 sont prévues de sorte que le premier côté 30 puisse pivoter dans le plan formé par le bras principal 10 et le bras secondaire 12. Ainsi, lorsque l'extrémité avant du bras secondaire 12 est translatée, la biellette 18 pivote autour de la liaison avec le bras principal 10 et l'inclinaison du balai 2 varie.

Cependant, lorsque le bras principal 10 tourne autour de son axe longitudinal Y, le bras secondaire 12 est également entraîné dans un mouvement de rotation. Les moyens de transmission 21 comprennent une rotule de translation 19 solidaire de la première pièce de transmission 15. La rotule de translation 19 et la première pièce de transmission 15 sont ici d'une seule pièce. L'extrémité arrière du bras secondaire 12 entoure une partie de la rotule de translation 19, de telle sorte que la rotule de translation 19 permet d'absorber les mouvements de rotation du bras secondaire 12 engendrés par la rotation du bras principal 10 autour de l'axe longitudinal Y, tout en permettant la transmission des mouvements de translation.

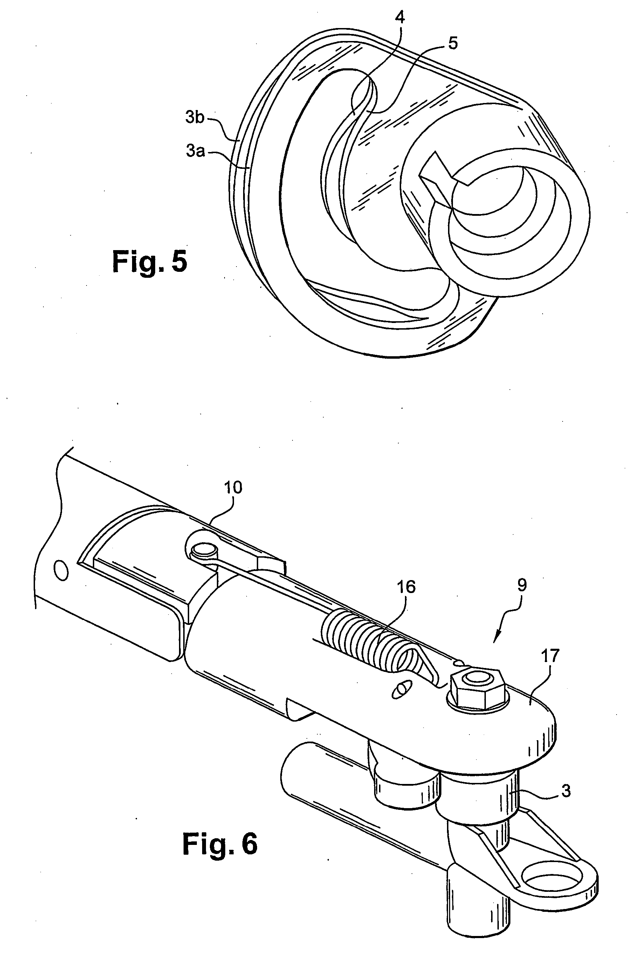

Comme illustré sur la figure 6, l'essuie-glace 20 peut comprendre un moyen élastique de rappel 16, comme par exemple un ressort, entre le pivot rotatif de l'essuie-glace 20 et le bras principal 10. Le ressort permet de corriger des jeux éventuels entre le bras principal et le pivot rotatif.

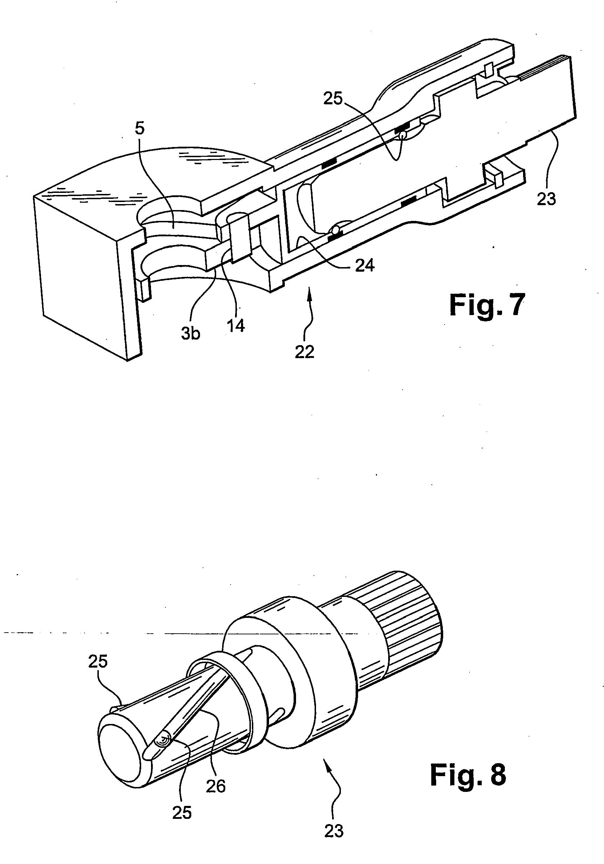

Selon un second mode de réalisation, illustré par les figures 7 et 8, les moyens de conversion 22' comprennent, outre la deuxième pièce de transmission 14, une douille à billes 24 et un arbre 23 dont une partie est placée à l'intérieur de la douille à billes 24. La douille à billes est solidaire de la deuxième pièce de transmission 14, de telle sorte qu'un mouvement de translation de la deuxième pièce de transmission entraîne également la douille à billes 24 en translation.

L'arbre 23 comprend des rainures hélicoïdales 26 et la douille à billes comprend des billes 25. Les rainures hélicoïdales 26 et les billes 25 ont des dimensions autorisant un mouvement relatif des billes 25 le long des rainures hélicoïdales 26, mais obligeant les billes 25 à rester à l'intérieur des rainures hélicoïdales 26. Les billes 25 sont fixées sur la douille à billes 24, mais peuvent rouler sur elles-mêmes. Lorsque la douille à bille 24 est déplacée en translation, les billes 25 sont également déplacées en translation, forçant l'arbre 23 à tourner sur lui-même.

L'arbre 23 est lié au bras principal, non représenté sur les figures 7 et 8, de telle sorte que la rotation de l'arbre entraîne la rotation du bras principal.

## Revendications

1. Essuie-glace (20) de type pantographe comprenant
un support (1) portant un balai (2), le support étant entraînable en pivotement d'essuyage autour d'un pivot rotatif (11) et comprenant un bras principal (10),
un bras secondaire (12), l'inclinaison du balai relativement au support étant déterminée par les positions relatives des extrémités avant du bras principal et du bras secondaire,
une première came (3a) comprenant une première trajectoire de guidage (5) destinée à recevoir une première pièce de transmission (15), une première pièce choisie parmi la première came et la première pièce de transmission étant liée au bras secondaire, l'essuie-glace comprenant par ailleurs
une seconde came (3b) comprenant une seconde trajectoire de guidage (4) destinée à recevoir une deuxième pièce de transmission (14),
des moyens de conversion (22) comprenant une seconde pièce choisie parmi la deuxième pièce de transmission et la seconde came, les moyens de conversion agissant sur le bras principal, **caractérisé en ce que** les moyens de conversion permettent de transformer un mouvement de translation le long d'un axe longitudinal (Y) du bras principal, engendré par la seconde trajectoire de guidage, en un mouvement de rotation du bras principal autour de cet axe longitudinal.

2. Essuie-glace (20) selon la revendication 1, **caractérisé en ce que**
la première pièce comprend la première pièce de transmission (15), et
la seconde pièce comprend la deuxième pièce de transmission (14).

3. Essuie-glace (20) selon la revendication 2, dans lequel
la première came (3a) et la seconde came (3b) sont d'une seule pièce.

4. Essuie-glace (20) selon l'une des revendications 2 à 3, **caractérisé en ce que**
la première trajectoire de guidage comprend une première rainure (5), et
la seconde trajectoire de guidage comprend une seconde rainure (4).

5. Essuie-glace (20) selon l'une des revendications 2 à 4, comprenant par ailleurs
des moyens de transmission (21) permettant de translater le bras secondaire (12) sensiblement dans la direction de l'axe longitudinal (Y), les moyens de transmission comprenant
la première pièce de transmission (15), et
une rotule de translation (19) solidaire de la première pièce de transmission.

6. Essuie-glace (20) selon l'une des revendications 2 à 5, **caractérisé en ce que**
les moyens de conversion (22) comprennent une rainure oblique (7) par rapport à l'axe longitudinal (Y), liée à la deuxième pièce de transmission (14) et destinée à recevoir un tenon (8) lié au bras principal (10).

7. Essuie-glace (20) selon l'une des revendications 2 à 5, **caractérisé en ce que**
les moyens de conversion (22') comprennent
une douille à bille (24) liée à la deuxième pièce de transmission (14),
un arbre (23) coopérant avec la douille à bille, l'arbre comprenant une rainure hélicoïdale et l'arbre étant lié au bras principal.

8. Essuie-glace (20) selon l'une des revendications 2 à 7, comprenant
un moyen élastique de rappel (16) entre le pivot rotatif (11) et le bras principal (10).

## Claims

1. A windscreen wiper (20) of the pantograph type comprising
a support (1) carrying a blade (2), the support being drivable in wiping pivoting about a rotary pivot (11) and comprising
a main arm (10),
a secondary arm (12), the inclination of the blade relative to the support being determined by the relative positions of the front end of the main arm and of the secondary arm,
a first cam (3a) comprising a first guide path (5) intended to receive a first transmission piece (15), a first piece chosen from the first cam and the first transmission piece being connected to the secondary arm,
the windscreen wiper also comprising
a second cam (3b) comprising a second guide path (4) intended to receive a second transmission piece (14),
conversion means (22) comprising a second piece chosen from the first transmission piece and the second cam, the conversion means acting on the main arm, **characterised in that** the conversion means convert a translation movement along a longitudinal axis (Y) of the main arm, generated by the second guide path, into a rotation movement of the main arm about this longitudinal axis.

2. A windscreen wiper (20) according to claim 1, **characterised in that** the first piece comprises the first transmission piece (15), and the second piece comprises the second transmission piece (14).

3. A windscreen wiper (20) according to claim 2, in which the first cam (3a) and second cam (3b) are in a single piece.

4. A windscreen wiper (20) according to one of claims 2 to 3, **characterised in that**
the first guide path comprises a first groove (5), and
the second guide path comprises a second groove (4).

5. A windscreen wiper (20) according to one of claims 2 to 4, also comprising
transmission means (21) for translating the secondary arm (12) substantially in the direction of the longitudinal axis (Y), the transmission means comprising
the first transmission piece (15), and
a translation swivel (19) secured to the first transmission piece.

6. A windscreen wiper (20) according to one of claims 2 to 5, **characterised in that**
the conversion means (22) comprise a groove (7) oblique with respect to the longitudinal axis (Y), connected to the second transmission piece (14) and intended to receive a tenon (8) connected to the main arm (10).

7. A windscreen wiper (20) according to one of claims 2 to 5, **characterised in that**
the conversion means (22') comprise
a ball socket (24) connected to the second transmission piece (14),
a shaft (23) cooperating with the ball socket, the shaft comprising a helical groove and the shaft being connected to the main arm.

8. A windscreen wiper (20) according to one of claims 2 to 7, comprising an elastic return means (16) between the rotary pivot (11) and the main arm (10).

## Patentansprüche

1. Scheibenwischer (20) von der Art mit Pantograf, der folgende Elemente umfaßt:
Einen Träger (1), der ein Wischerblatt (2) trägt, wobei der Träger zum Wischen in Drehung um einen Drehzapfen (11) versetzt werden kann und einen Hauptwischerarm (10) umfaßt.
Einen sekundären Arm (12), wobei die Neigung des Wischblatts in Bezug auf den Träger durch die relativen Positionen der vorderen Enden des Hauptarms und des sekundären Arms bestimmt wird.
Eine erste Schaltscheibe (3a), die eine erste Führungsbahn (5) umfaßt, die ein erstes Übertragungsteil (15) aufnehmen soll, wobei ein erstes unter der ersten Schaltscheibe und dem ersten Übertragungsteil gewähltes erstes Teil mit dem sekundären Arm verbunden ist.
Wobei der Scheibenwischer ferner eine zweite Schaltscheibe (3b) umfaßt, die eine zweite Führungsbahn (4) umfaßt, die ein zweites Übertragungsteil (14) aufnehmen soll.
Umwandlungsmittel (22), die ein zweites Teil umfassen, das unter dem zweiten Übertragungsteil und der zweiten Schaltscheibe gewählt wurde, wobei die Umwandlungsmittel auf den Hauptarm einwirken. Die Umwandlungsmittel ermöglichen, eine Translationsbewegung entlang einer Längsachse(Y) des Hauptarms, das durch die zweite Führungsbahn erzeugt wird, in eine Drehbewegung des Hauptarms um diese Längsachse umzuwandeln.

2. Scheibenwischer (20) nach Anspruch 1, **dadurch gekennzeichnet, daß** das erste Teil das erste Übertragungsteil (15) umfaßt, und das zweite Teil das zweite Übertragungsteil (14) umfaßt.

3. Scheibenwischer (20) nach Anspruch 2, **dadurch gekennzeichnet, daß** die erste Schaltscheibe (3a) und die zweite Schaltscheibe (3b) aus einem einzigen Teil bestehen.

4. Scheibenwischer (20) nach einem beliebigen der vorstehenden Ansprüche 2 bis 3, **dadurch gekennzeichnet, daß** die erste Führungsbahn eine erste Nut (5) umfaßt, und die zweite Führungsbahn eine zweite Nut (4) umfaßt.

5. Scheibenwischer (20) nach einem beliebigen der vorstehenden Ansprüche 2 bis 4, **dadurch gekennzeichnet, daß** er ferner Übertragungsmittel (21) umfaßt, mit denen der sekundäre Arm (12) quer und zwar deutlich in der Richtung der Längsachse (Y) bewegt werden kann, wobei die Übertragungsmittel ferner folgende Teile umfassen:
Das erste Übertragungsteil (15) und eine Translationskugel (19), die fest mit dem ersten Übertragungsteil verbunden ist.

6. Scheibenwischer (20) nach einem beliebigen der vorstehenden Ansprüche 2 bis 5, **dadurch gekennzeichnet, daß** die Umwandlungsmittel (22) eine im Verhältnis zur Längsachse Y schräg verlaufende Nut (7) umfassen, die mit dem zweiten Übertragungsteil (14) verbunden und dazu bestimmt ist, einen mit dem Hauptarm (10) verbundenen Zapfen (8) aufzunehmen.

7. Scheibenwischer (20) nach einem beliebigen der vorstehenden Ansprüche 2 bis 5, **dadurch gekennzeichnet, daß** die Umwandlungsmittel (22') eine Kugelhülse (24) umfassen, die mit dem zweiten Übertragungsmittel (14) verbunden ist, und ferner eine Welle (23), die mit der Kugelhülse zusammenwirkt, wobei die Welle eine schraubenförmige Nut umfaßt und die Welle mit dem Hauptarm verbunden ist.

8. Scheibenwischer (20) nach einem beliebigen der vorstehenden Ansprüche 2 bis 7, **dadurch gekennzeichnet, daß** er ein elastisches Rückholmittel (16) zwischen dem Drehzapfen (11) und dem Hauptarm umfaßt.
